# EUROPEAN PATENT APPLICATION

(11) **EP 3 511 141 A1**
(43) Date of publication of application: **17.07.2019**
(21) Application number: 18157504.4
(22) Date of filing: 19.02.2018
(51) Int. Cl.: B29B 17/04

(54) **CARBON FIBER RECYCLING METHOD**

(30) Priority: 12.01.2018 TW 107101348
(71) Applicant: UHT Unitech Co., Ltd, 32061 Taoyuan City (TW)
(72) Inventor: WANG, Chih-Yung, 32061 Taoyuan City (TW)
(74) Representative: Lang, Christian

(57) **Abstract**

The present disclosure relates to a carbon fiber recycling method utilizing a microwave to recycle a carbon fiber from a carbon fiber polymer composite. The carbon fiber recycling method comprise a composite providing step, an oxygen lowering step, a microwave processing step, a gas replacing step and a carbon fiber recycling step. By radiating the microwave on the carbon fiber polymer composite, energy of the microwave is quickly absorbed by the carbon fiber to quickly increase a temperature of the carbon fiber, and the carbon fiber polymer composite is effectively and quickly decomposed to remove most polymer matrix of the carbon fiber polymer composite, so as to achieve the objective of recycling the carbon fiber indeed.

## Description

### BACKGROUND

### 1. Technical Field

The present disclosure relates to a carbon fiber recycling method, in particular, to a carbon fiber recycling method which utilizes a microwave to recycle a carbon fiber from a carbon fiber polymer composite.

### 2. Description of Related Art

According to the current technology, the carbon fiber polymer composites (such as, Carbon Fiber Reinforced Polymer/Plastic, CFRP) are widely used in the industrial fields of aerospace aircrafts, golf clubs, tennis racquets, cars, wind powers, and medical devices since the carbon fiber polymer composite have properties of the high strength, the high elastic modulus, the nice heat resistance and the nice corrosion resistance. The produced scrap at the manufacturing stage or the carbon fiber polymer composite waste material of the scrap product with the ended usage lifetime may have the processing problem, wherein the manner for burning the carbon fiber polymer composite can merely burn the resin away, and the carbon fiber is still remained as the residue. Accordingly, the carbon fiber polymer composite waste material is usually seemed as the non-combustible solid waste and processed by the landfill manner. However, the landfill manner causes the waste of the land resource and further deteriorates surroundings. Moreover, the carbon fiber polymer composite has the high valuable carbon fiber therein, and processing by the landfill manner undoubtedly causes large waste of the carbon fiber.

There are several methods provided by the prior art to solve the above the problems, and they mainly decompose the polymers of the carbon fiber polymer composite, such that the carbon fiber in the carbon fiber polymer composite can be separated to achieve the objective of recycling the carbon fiber, wherein the polymer decomposing methods comprise the thermal decomposition, the inorganic strong acid decomposition, the organic solvent decomposition and the supercritical fluid decomposition. Though using the organic solvent decomposition can obtain the clean carbon fiber, much organic solvent is used during recycling, and thus it causes the pollution of the environment. Furthermore, after the solvent has been used, the separation operation of the solvent is complicate, and it causes the high recycling cost. Though the supercritical fluid decomposition has the clean and free pollution advantage, the supercritical fluid decomposition must progress under the high temperature and high pressure reaction condition, it needs high reaction device requirement, and the degraded production and the fluid are mixed together to be separated hardly.

The practicable industrial manner among the prior art is the thermal decomposition for processing the waste carbon fiber polymer composite. The thermal decomposition is to dispose the waste carbon fiber polymer composite in the thermal air for decomposition, and the manner is more effective for the carbon fiber polymer composite doped with the heterogeneous material, such as the metal, and can be operated continuously. However, the carbon fiber obtained from the reaction may be oxidized much, and it may have the little force property since the carbon fiber is strongly struck in the reactor or the separator. Accordingly, how to effectively use the novel hardware design to recycle the high pure and high performance carbon fiber disposed at different angles and to reduce the input energy, consuming time and labor cost is still an issue to be continuously improved or solved by the carbon fiber recycling industry and researcher.

### SUMMARY

The present disclosure mainly provides a carbon fiber recycling method which radiates the microwave to the carbon fiber of the carbon fiber polymer composite, such that energy of the microwave is quickly absorbed by the carbon fiber to quickly increase a temperature of the carbon fiber, and the carbon fiber polymer composite is effectively and quickly decomposed to remove most polymer matrix of the carbon fiber polymer composite, so as to achieve the objective of recycling the carbon fiber indeed.

To achieve one of the above objectives, the present disclosure provides carbon fiber recycling method used to recycle a first carbon fiber from a carbon fiber polymer composite, wherein the carbon fiber polymer composite comprises a polymer matrix and the first carbon fiber, the polymer matrix is coupled to the first carbon fiber, the first carbon fiber comprises a first long axis direction, and the carbon fiber recycling method comprises following sequential steps:
a composite providing step: providing the carbon fiber polymer composite; and
a microwave processing step: exposing the carbon fiber polymer composite in a first microwave; wherein the first microwave has a first microwave direction, the first microwave comprises a first electrical field, the first electrical field has a first electrical field direction, and the first microwave direction and the first electrical field direction are perpendicular to each other.

Regarding the carbon fiber recycling method, the long axis direction of the first carbon fiber and the first microwave direction are perpendicular to each other.

Regarding the carbon fiber recycling method, the long axis direction of the first carbon fiber and the first electrical field direction are parallel to each other.

Regarding the carbon fiber recycling method, the carbon fiber recycling method further comprises an oxygen lowering step executed after the composite providing step and before the microwave processing step, the oxygen lowering step makes the carbon fiber polymer composite disposed within a first gas atmosphere, and the first gas atmosphere has a first oxygen concentration.

Regarding the carbon fiber recycling method, the carbon fiber recycling method further comprises a gas replacing step, the carbon fiber polymer composite is continuously illuminated under the first microwave, and after the microwave processing step, the gas replacing step is executed; still under continuous illumination of the first microwave, the gas replacing step makes the carbon fiber polymer composite disposed within a second gas atmosphere, and the second gas atmosphere has a second oxygen concentration larger than the first oxygen concentration.

Regarding the carbon fiber recycling method, the carbon fiber recycling method further comprises a carbon fiber recycling step, the carbon fiber recycling step is executed after the gas replacing step; the carbon fiber recycling step makes the first carbon fiber not exposed within the first microwave, and obtains the first carbon fiber.

Regarding the carbon fiber recycling method, the first oxygen concentration is lower than or equal to 1 ppm, and the second oxygen concentration is larger than 1 ppm.

Regarding the carbon fiber recycling method, an electrical power density of the first microwave is between 200 W/m³ and 2000 kW/m³.

Regarding the carbon fiber recycling method, in the composite providing step, the carbon fiber polymer composite is cut, then the carbon fiber polymer composite is forward arranged or stacked centrally along the long axis direction of the first carbon fiber, such that the first electrical field direction and the long axis direction of the first carbon fiber are parallel to each other

Regarding the carbon fiber recycling method, the first microwave is propagated to interior of a cavity, the carbon fiber polymer composite is disposed in the interior of the cavity, and a volume ratio of the carbon fiber polymer composite to the cavity is between 0.3 and 0.8.

Regarding the carbon fiber recycling method, the volume ratio of the carbon fiber polymer composite to the cavity is between 0.35 and 0.5

Regarding the carbon fiber recycling method, in the microwave processing step, the carbon fiber polymer composite is exposed in a second microwave; wherein the second microwave has a second microwave direction , the second microwave comprises a second electrical field, the second electrical field has a second electrical field direction, and the second microwave direction and the second electrical field direction are perpendicular to each other; moreover, the second electrical field direction and the first electrical field direction are perpendicular to each other.

Regarding the carbon fiber recycling method, the first microwave is propagated to interior of a cavity, the carbon fiber polymer composite is disposed in the interior of the cavity, the cavity has a long axis direction of the cavity, the first electrical field direction and the long axis direction of the cavity has a tilting angle, and the tilting angle is larger than 0 degree and less than or equal to 90 degrees.

Regarding the carbon fiber recycling method, the first microwave is propagated to interior of a cavity, the carbon fiber polymer composite is disposed in the interior of the cavity, and the cavity is a hollow cylinder.

Regarding the carbon fiber recycling method, the first microwave is propagated to interior of a cavity, the carbon fiber polymer composite is disposed in the interior of the cavity, and the cavity is a hollow polygonal prism.

Regarding the carbon fiber recycling method, outer circumference of the hollow polygonal prism is formed by a plurality of outer surfaces, twos of the outer surfaces are respectively a first outer surface and a second outer surface, and the first outer surface and the second outer surface are adjacent to each other; inner circumference of the hollow polygonal prism is formed by a plurality of inner surfaces, and the inner surfaces have a first inner surface corresponding to the first outer surface and a second inner surface corresponding to the second outer surface; the first outer surface and the second outer surface have an angle therebetween, or the first inner surface and the second inner surface have the angle therebetween; the angle is between 60 degrees and 160 degrees.

Regarding the carbon fiber recycling method, the angle is between 90 degrees and 150 degrees.

Regarding the carbon fiber recycling method, the angle is between 120 degrees and 144 degrees.

Regarding the carbon fiber recycling method, the angle is 120 degrees.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a schematic diagram of a whole device for executing a carbon fiber recycling method according to a first embodiment of the present disclosure.
FIG. 2 is a sectional view of a configuration of a microwave providing unit and a cavity for the carbon fiber recycling method according to the first embodiment of the present disclosure.
FIG. 3 is a three-dimensional diagram of the microwave providing unit and the cavity for the carbon fiber recycling method according to the first embodiment of the present disclosure.
FIG. 4 is a schematic diagram showing a propagating direction of a microwave of the carbon fiber recycling method according to the first embodiment of the present disclosure.
FIG. 5 is a flow chart of the carbon fiber recycling method according to the first embodiment of the present disclosure.
FIG. 6 is a three-dimensional diagram of a microwave providing unit and a cavity for a carbon fiber recycling method according to a second embodiment of the present disclosure.
FIG. 7 is a schematic diagram showing a propagating direction of a microwave of the carbon fiber recycling method according to the second embodiment of the present disclosure.
FIG. 8 is a three-dimensional diagram of a microwave providing unit and a cavity for a carbon fiber recycling method according to a third embodiment of the present disclosure.
FIG. 9 is a schematic diagram showing a propagating direction of a microwave of the carbon fiber recycling method according to the third embodiment of the present disclosure.
FIG. 10 is a three-dimensional diagram of a microwave providing unit and a cavity for a carbon fiber recycling method according to a fourth embodiment of the present disclosure.
FIG. 11 is a schematic diagram showing a propagating direction of a microwave of the carbon fiber recycling method according to the fourth embodiment of the present disclosure.
FIG. 12 is a three-dimensional diagram of a microwave providing unit and a cavity for a carbon fiber recycling method according to a fifth embodiment of the present disclosure.
FIG. 13 is a three-dimensional diagram of a microwave providing unit and a cavity for a carbon fiber recycling method according to a sixth embodiment of the present disclosure.

### DESCRIPTION OF THE EXEMPLARY EMBODIMENTS

To understand the technical features, content and advantages of the present disclosure and its efficacy, the present disclosure will be described in detail with reference to the accompanying drawings. The drawings are for illustrative and auxiliary purposes only and may not necessarily be the true scale and precise configuration of the present disclosure. Therefore, the scope of the present disclosure should not be limited to the scale and configuration of the attached drawings.

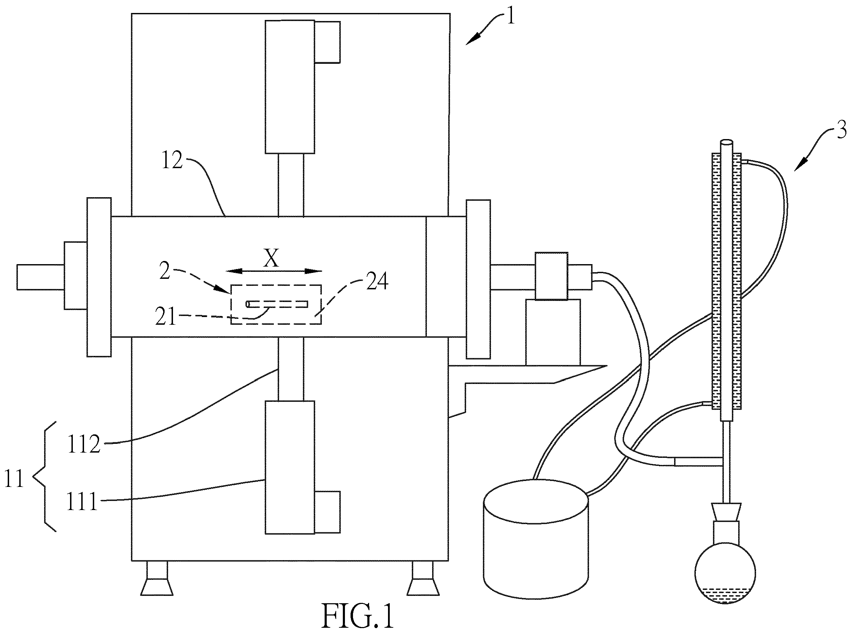

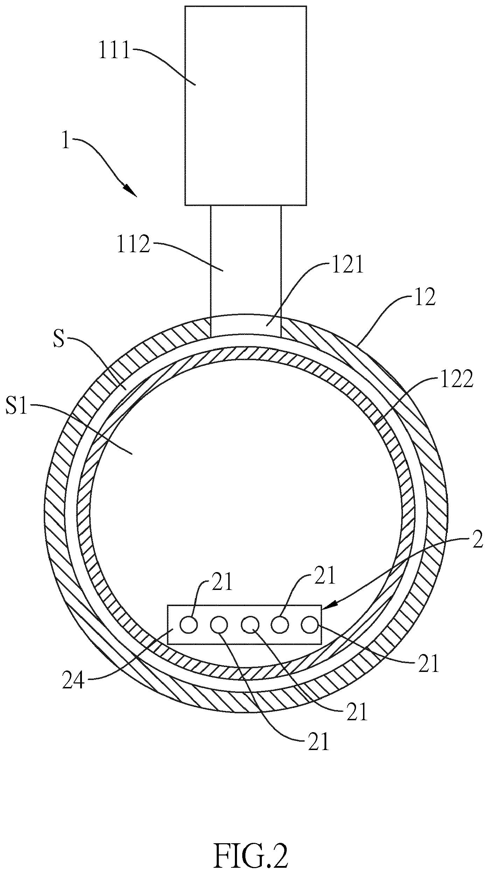

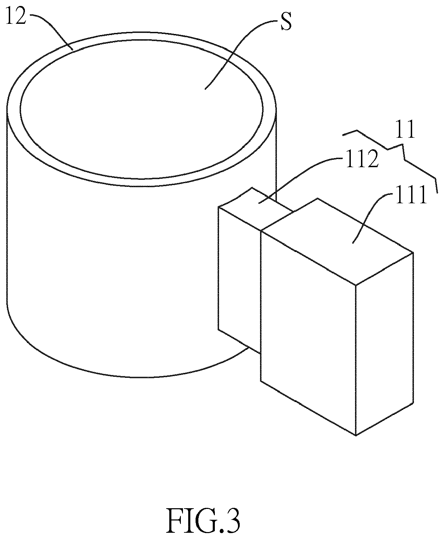

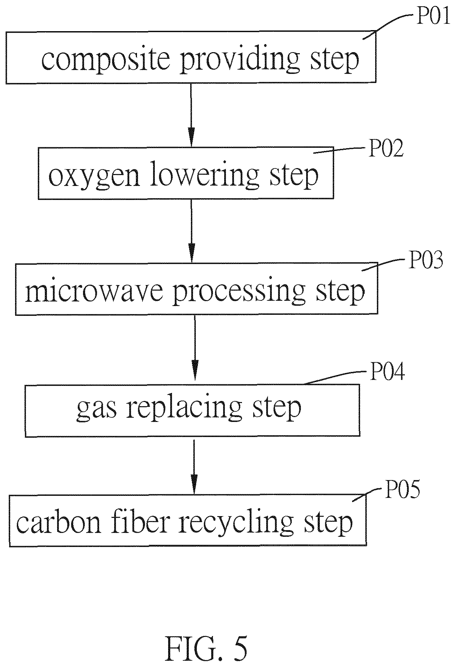

Firstly, referring to FIG. 1 through FIG. 5, the carbon fiber recycling method of a first embodiment of the present disclosure is used to recycle a first carbon fiber 21 from a carbon fiber polymer composite 2. The carbon fiber polymer composite 2 comprises a polymer matrix 24 and the first carbon fiber 21, wherein the polymer matrix 24 is coupled to the first carbon fiber 21, and the first carbon fiber 21 comprises a long axis direction X, the long axis direction X of the first carbon fiber 21 is the extending direction of the first carbon fiber 21. Preferably, the polymer matrix 24 covers the first carbon fiber 21 and couples to the first carbon fiber 21. Preferably, the carbon fiber polymer composite 2 comprises the polymer matrix 24 and a plurality of the first carbon fibers 21, and the first carbon fibers 21 are arranged parallel to the long axis direction X of the first carbon fibers 21 in sequence. The polymer matrix 24 can be the thermosetting resin, the room temperature curing resin or the thermoplastic, and the thermosetting resin can be one of the unsaturated polyester resin and the epoxy resin for example.

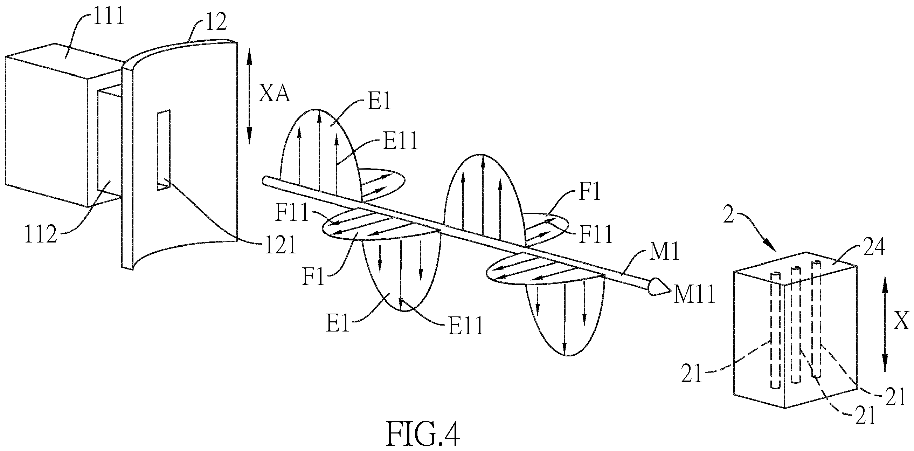

The carbon fiber recycling method of the present disclosure can be utilized by a carbon fiber recycling device 1 to recycle the first carbon fiber 21. The carbon fiber recycling device 1 comprises at least one first microwave supplying unit 11 and a cavity 12, wherein the first microwave supplying unit 11 comprises a first microwave source 111 and a first waveguide tube 112. One end of the first waveguide tube 112 is coupled to the first microwave source 111, and other one end of the first waveguide tube 112 is coupled to the cavity 12. The first microwave providing unit 11 of the first microwave supplying unit 11 is used to generate a first microwave M1, and the first microwave M1 is propagated into interior of the cavity 12 through the first waveguide tube 112 from the first microwave source 111. The first microwave M1 comprises a first electric field E1 and a first magnetic field F1, wherein the first microwave M1 is propagated into the interior of the cavity 12 along a first microwave direction M11, the first electric field E1 within the interior of the cavity 12 has a first electric field direction E11, and the first magnetic field F1 within the interior of the cavity 12 has a first magnetic field direction F11. According to Fleming's right-hand rule, as shown in FIG. 4, the first microwave direction M11, the first electric field direction E11 and the first magnetic field direction F11 are perpendicular to each other.

The interior of the cavity 12 is opened to have an accommodating space S, and the carbon fiber polymer composite 2 is disposed in the accommodating space S. The cavity 12 has a first sidewall hole 121 coupled to the other one end of the first waveguide tube 112, such that the first microwave M1 can be propagated to the accommodating space S. The cavity 12 is made of the microwave-reflective material, such as the cavity 12 is made of the metal material to form a metal cavity with a close configuration. Since the metal can reflect the first microwave M1, the first microwave M1 in the accommodating space S can oscillate and be uniformly filled in the cavity 12. Furthermore, by using the metal to reflect the first microwave M1, the operator and other device out of the cavity 12 can be protected. The shape of the cavity 12 is not limited, for example, the cavity 12 can be one of the hollow cylinder and the hollow polygonal prism. The cavity 12 has a long axis direction XA, wherein the long axis direction XA of the cavity 12 is the extending direction of the cavity 12. As shown in FIG. 4, the long axis direction XA of the cavity 12 is the extending direction of the hollow cylinder.

The carbon fiber recycling method of the present disclosure in the implementation can comprise steps as follows:
a composite providing step P01: providing the carbon fiber polymer composite 2; and
a microwave processing step P03: exposing the carbon fiber polymer composite 2 in a first microwave M1.

The carbon fiber recycling method of the present disclosure be applied in the implementation of the carbon fiber recycling device 1, the carbon fiber polymer composite 2 is disposed in the accommodating space S, the first microwave source 111 is then activated to generate the first microwave M1, and the first microwave M1 is propagated to the accommodating space S through the first waveguide tube 112 and the first sidewall hole 121. The first microwave M1 is radiated to the carbon fiber polymer composite 2, such the first carbon fiber 21 within the carbon fiber polymer composite 2 can quickly absorb the energy of the first microwave M1, so as to increase the temperature of the first carbon fiber 21 immediately and to heat the first carbon fiber 21. Thus, the portion of the polymer matrix 24 contacting the carbon fiber is heated to be decomposed to a plurality of small organic molecules, and due to the heat transmission effect, the other portion of the polymer matrix 24 is also heated to be decomposed to a plurality of small organic molecules.

It is noted that, if the carbon fiber polymer composite 2 is disposed in the manner that the long axis direction X of first carbon fiber 21 is parallel to the first microwave direction M11, the absorption rate of the first carbon fiber 21 for the energy of the first microwave M1 will not be large, and the temperature of the first carbon fiber 21 will not be increased sufficiently, such that the polymer matrix 24 is unable to be decomposed to the small organic molecules. If he carbon fiber polymer composite 2 is disposed in the manner that the long axis direction X of first carbon fiber 21 is perpendicular to the first microwave direction M11, the absorption rate of the first carbon fiber 21 for the energy of the first microwave M1 will be large, and the temperature of the first carbon fiber 21 will be increased sufficiently, such that the polymer matrix 24 is able to be decomposed to the small organic molecules. Thus, in the microwave processing step P03, the long axis direction X of the first carbon fiber 21 is preferably perpendicular to the first microwave direction M11.

It is further to be noted that, in addition to make the long axis direction X of the first carbon fiber 21 be perpendicular to the first microwave direction M11, if the first carbon fiber 21 is disposed to further make the long axis direction X of the first carbon fiber 21 be perpendicular to the first electric field direction E11, the absorption rate of the first carbon fiber 21 for the energy of the first electric field E1 will not be large, and the temperature of the first carbon fiber 21 will not be increased sufficiently, such that the polymer matrix 24 is unable to be decomposed to the small organic molecules. If the first carbon fiber 21 is disposed to further make the long axis direction X of the first carbon fiber 21 be parallel to the first electric field direction E11, the absorption rate of the first carbon fiber 21 for the energy of the first electric field E1 will be large, and the temperature of the first carbon fiber 21 will be increased sufficiently, such that the polymer matrix 24 is able to be decomposed to the small organic molecules. Accordingly, in the microwave processing step P03, the long axis direction X of the first carbon fiber 21 and the first electrical field direction E11 are parallel to each other, the partial component of the oscillating direction of the first electrical field direction E11 of the first electrical field E1 parallel to the first carbon fiber 21 is converted to the thermal energy, and the thermal energy is transmitted to the polymer matrix 24 of the first carbon fiber 21 to decompose the polymer matrix 24. Therefore, the thermal cracking is happened to the polymer matrix 24. The electrical power density of the first microwave M1 is preferably between 200 kW/m³ and 2000 kW/m³.

Based upon the above findings, in the composite providing step P01, the carbon fiber polymer composite 2 is cut, then the carbon fiber polymer composite 2 is forward arranged or stacked centrally along the long axis direction X of the first carbon fiber 21 and sent into the cavity 12, such that the long axis direction XA of the cavity 12, the first electrical field direction E11 and the long axis direction (X) of the first carbon fiber 21 are parallel to each other, the long axis direction XA of the cavity 12 is perpendicular to the first microwave direction M11, and the long axis direction X of the first carbon fiber 21 is perpendicular to the first microwave direction M11. A volume ratio of the carbon fiber polymer composite (2) to the cavity (12) is preferably between 0.3 and 0.8, and optimally between 0.3 and 0.5.

The carbon fiber recycling method further comprises an oxygen lowering step P02: making the carbon fiber polymer composite 2 disposed within a first gas atmosphere, and the first gas atmosphere has a first oxygen concentration, wherein the first oxygen concentration is preferably lower than or equal to 1 ppm. For example, after composite providing step P01 is executed, vacuum exhausting is performed on the original gas of the interior of the cavity 12, or gas replacing is performed on the original gas of the interior of the cavity 12 to make the interior of the cavity 12 filled of the inert gas or oxygen, such that the interior of the cavity 12 is filled of the first atmosphere. The executing order of the oxygen lowering step P02 in practice is between the composite providing step P01 and the microwave processing step P03. In the microwave processing step P03, the carbon fiber polymer composite 2 is exposed in the first microwave M1 and the first atmosphere, and since the polymer matrix 24 is heated under the condition of the low oxygen concentration (for example, lower than or equal to 1 ppm) of the first atmosphere, the most portion of the polymer matrix 24 is thermally decomposed to the small organic molecule without burning. Accordingly, the cavity 12 has no overheated danger caused by the small organic molecule burning.

Referring to Table 1, a short fiber plywood, a warp and weft fiber plywood and a forward fiber plywood are prepared to implement carbon fiber recycling method, and the rates of removing the polymer matrix 24 are measured after executing the oxygen lowering step P02. Regarding the short fiber plywood, the first carbon fibers 21 of the carbon fiber polymer composite 2 are the short fiber type, and the first carbon fibers 21 are distributed along the disorder directions in the three-dimensional space of the polymer matrix 24. Regarding the warp and weft fiber plywood, the first carbon fibers 21 of the carbon fiber polymer composite 2 are the long fiber type, and the first carbon fibers 21 are vertically weaved in a latitude direction and a longitude direction and covered by the polymer matrix 24, wherein the numbers of the first carbon fibers 21 in the latitude direction and the longitude directions are the same one. Regarding the forward fiber plywood, the first carbon fibers 21 of the carbon fiber polymer composite 2 are the long fiber type, and the first carbon fibers 21 are parallel to each other and covered by the polymer matrix 24. It is noted that the weights of the first carbon fibers 21 in the short fiber plywood, the warp and weft fiber plywood and the forward fiber plywood are identical to each other, the weights of the polymer matrices 24 are the same one, therefore the weights of the carbon fiber polymer composites 2 are the same one. Table 1 shows the first microwave M1 of the carbon fiber recycling method has an electrical power density of 30 kW/m³, the reaction time of the first microwave M1 is 20 minutes, the first oxygen concentration is 0.9 ppm, the polymer matrix 24 is the epoxy resin, and the first carbon fibers 21 are made of the polyacrylonitrile (PAN). The carbon fiber polymer composites 2 have the weight of 3000 grams, the first carbon fibers 21 have the weights of 1890 grams, and the polymer matrices 24 have the weights of 1110 grams. When the forward fiber plywood is disposed in the interior of the cavity 12, the first electrical field direction E11 is parallel to the long axis direction X of the first carbon fibers 21; when the warp and weft fiber plywood is disposed in the interior of the cavity 12, the first electrical field direction E11 is parallel to the long axis direction X of the first carbon fibers 21 in the longitude directions; when the short fiber plywood is disposed in the interior of the cavity 12, the relation of the first electrical field direction E11 and the long axis direction X of the first carbon fibers 21 is not considered since the first carbon fibers 21 are distributed along the disorder directions.

**TABLE 1**

| NUMBER | TYPE OF CARBON FIBER POLYMER COMPOSITE | INITIAL WEIGHT OF CARBON FIBER POLYMER COMPOSITE | RESIDUAL WEIGHT OF CARBON FIBER POLYMER COMPOSITE | RATE OF REMOVING POLYMER MATRIX |
|---|---|---|---|---|
| 1 | SHORT FIBER PLYWOOD | 3000 grams | 2800 grams | 18% |
| 2 | WARP AND WEFT FIBER PLYWOOD | 3000 grams | 2711 grams | 26% |
| 3 | FORWARD FIBER PLYWOOD | 3000 grams | 2645 grams | 32% |

In the implementation of Number 1, since the first carbon fibers 21 of the short fiber type are distributed along the disorder directions in the three-dimensional space of the polymer matrix 24, the first electrical field direction E11 is parallel to the long axis directions X of the partial first carbon fibers 21, merely the partial first carbon fibers 21 absorb the energy of the first electrical field E1, and the temperature of the first carbon fibers 21 is increased slowly and not high, such that the polymer matrix 24 near the first carbon fibers 21 is thermally decomposed slowly, and the rate of removing the polymer matrix 24 is merely 18 % under the above process condition. In the implementation of Number 2, since the first electrical field direction E11 is parallel to the long axis directions X of the half of the first carbon fibers 21, the energy of the first electrical field E1 absorbed by the first carbon fibers 21 is more than that in the implementation of Number 1, and the increasing speed of the temperature of the first carbon fibers 21 is faster than that in the implementation of Number 1, such that the polymer matrix 24 near the first carbon fibers 21 is thermally decomposed quickly, and the rate of removing the polymer matrix 24 is 26 % under the above process condition. In the implementation of Number 3, since the first electrical field direction E11 is parallel to the long axis directions X of all the first carbon fibers 21, all the energy of the first electrical field E1 is absorbed by the first carbon fibers 21, the increasing speed of the temperature of the first carbon fibers 21 is faster than that in the implementation of Number 2, and the thermal decomposition of the polymer matrix 24 near the first carbon fibers 21 is also faster than that in the implementation of Number 2, such that the rate of removing the polymer matrix 24 can achieve 32 % under the above process condition.

The above Table 1 sufficiently proofs the first carbon fibers 21 can absorb all the energy of the first electrical field E1 when the first electrical field direction E11 is parallel to the long axis directions X of all the first carbon fibers 21, as shown by the experiment result of the implementation of Number 3. Compared with the implementation of Number 1 which first electrical field direction E11 is merely parallel to the long axis directions X of the partial first carbon fibers 21, the rate of removing the polymer matrix 24 in the implementation of Number 3 is 1.78 times of that in the implementation of Number 1. Thus, compared with the conventional process, the feature of the present disclosure that the first electrical field direction E11 is parallel to the long axis direction X of the first carbon fiber 21 can enhance the efficiency of thermally decomposing the polymer matrix 24, and not only the time of recycling the first carbon fiber 21 from the carbon fiber polymer composite 2 can be shorten, but also all the energy of the first electrical field E1 of the first microwave M1 can be absorbed without wasting, which complies with the current requirements of power saving and environment protection.

The above small organic molecules can be transmitted a condensing device 3 from the accommodating space S of the cavity 12 by gas exhausting manner or a gas fluid flowing manner, and the small organic molecules can be condensed and captured by the condensing device 3, so as to prevent the small organic molecules from directly exhausting to air to pollute the environment.

The carbon fiber recycling method further comprises a gas replacing step P04: under continuous illumination of the first microwave M1, the carbon fiber polymer composite 2 is disposed within a second gas atmosphere, and the second gas atmosphere has a second oxygen concentration larger than the first oxygen concentration, for example, the second oxygen concentration is higher than 1 ppm. After the composite providing step P01, the oxygen lowering step P02 and the microwave processing step P03 are executed in sequence, the gas replace step P04 is performed on the carbon fiber polymer composite 2 under the continuous illumination of the first microwave M1. Specifically, when the microwave processing step P03 is executed, under the continuous illumination of the first microwave M1, most of the polymer matrix 24 is thermally decomposed to the small organic molecules without burning; and when the gas replacing step P04 is executed, under the continuous illumination of the first microwave M1, the residual portion of the polymer matrix 24 is still thermally decomposed to the small organic molecule continuously to form the coke which is entirely separated from the first carbon fiber 21.

After the gas replacing step P04 is executed, the carbon fiber recycling method further comprises a carbon fiber recycling step P05: making the first carbon fiber 21 not exposed within the first microwave M1, so as to obtain the first carbon fiber 21. For example, the supply of first microwave M1 is stopped, or a mechanical arm is used to move the first carbon fiber 21 away from the reaction range of the first microwave M1. Since most of the polymer matrix 24 is thermally decomposed to the small organic molecules in the microwave processing step P03, and the small organic molecules are transmitted to the condensing device 3 to be condensed and captured, the residual little portion of the polymer matrix 24 is converted to the coke entirely separated from the first carbon fiber 21 in the gas replacing step P04, such that the first carbon fiber 21 can be identified and obtained easily. For example, the air compressor blows the coke away from the first carbon fiber 21, such that the high pure and high performance first carbon fiber 21 can be recycled and obtained, which indeed achieves the objective of recycling the first carbon fiber 21 with the similar original appearance shape and physical properties.

In the embodiment without additionally heating the cavity 12, the small organic molecules can be easily condensed at the sidewall of the cavity 12, and thus it causes the sidewall is polluted and not easily cleaned. In addition, the cavity 12 can be further has a hollow tube 122 installed within the accommodating space S, hollow portion of interior of the hollow tube 122 can be opened to have a tube accommodating space S1, and the carbon fiber polymer composite 2 is disposed in the tube accommodating space S1, wherein the hollow tube 122 can be made of a microwave-penetrable material, for example, the hollow tube 122 can be a quartz tube, a crystal tube or a glass tube. Therefore, the small organic molecules can be condensed at the tube wall of the hollow tube 122, such as the quartz tube, and cleaning the tube wall of the quartz tube is easier and faster than cleaning the sidewall of the cavity 12. Furthermore, the hollow tube 122 after one operation can be replaced by another one clean hollow tube 122, so as to increase the processing speed.

The first embodiment is particularly suitable for the carbon fiber polymer composite 2 which is formed by the longitude-arranged first carbon fibers 21 and the polymer matrix 24, for example, the ribbon shaped carbon fiber polymer composite 2 formed by the longitude-arranged first carbon fibers 21 and the polymer matrix 24, wherein a direction of the longitude related to "longitude-arranged" is the long axis direction X of the first carbon fiber 21.

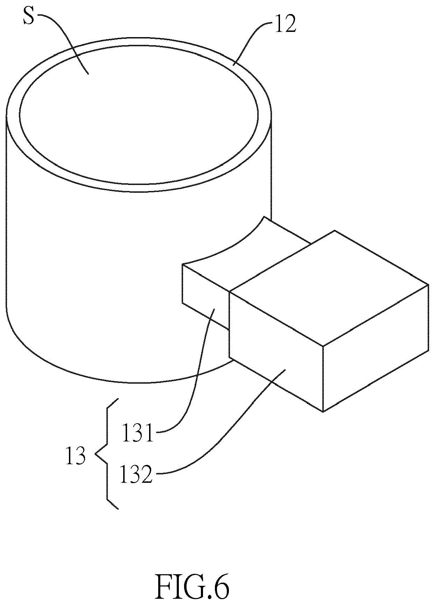

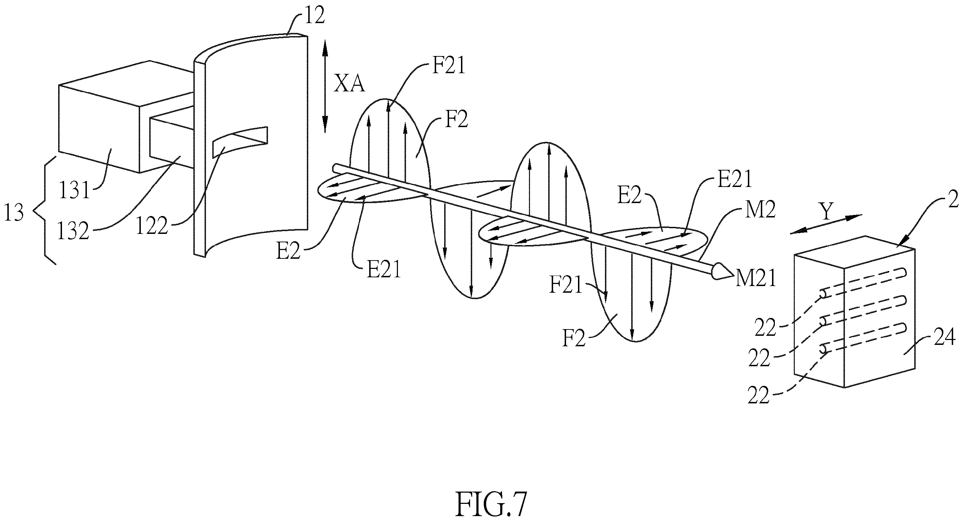

Referring to FIG. 6 an FIG. 7, a second embodiment of the present disclosure is illustrated. The carbon fiber recycling device 1 on the basis of the first embodiment further comprises at least one second microwave supplying unit 13, the second microwave supplying unit 13 is formed by a combination of a second microwave source 131 and a second waveguide tube 132. Similar to the first microwave supplying unit 11, one end of the second waveguide tube 132 is coupled to the second microwave source 131, and other one end of the second waveguide tube 132 is coupled to a second sidewall hole 122 of the cavity 12. The second microwave source 131 is used to generate a second microwave M2, the second microwave M2 is propagated to the second sidewall hole 122 and the accommodating space S of the cavity 12 from the second microwave source 131 through the second waveguide tube 132. The second microwave M2 comprises a second electric field E2 and a second magnetic field F2. The second microwave M2 is propagated to the interior (the accommodating space S) of the cavity along a second microwave direction M21. The second electric field E2 within the accommodating space S of the cavity has a second electric field direction E21. The second magnetic field F2 within the accommodating space S of the cavity has a second magnetic field direction F21. As shown in FIG. 7, the second microwave direction M21, the second electric field direction E21 and the second magnetic field direction F21 are perpendicular to each other.

On the basis of the first embodiment, in the second embodiment, the carbon fiber polymer composite 2 further comprises a second carbon fiber 22, and the second carbon fiber 22 further comprises a long axis direction Y, wherein the long axis direction Y of the second carbon fiber 22 is the extending direction of the second carbon fiber 22. Preferably, the polymer matrix 24 covers the second carbon fiber 22 and couples the second carbon fiber 22. Preferably, the carbon fiber polymer composite 2 comprises the polymer matrix 24 and a plurality of second carbon fibers 22, and the second carbon fibers 22 are in sequence arranged parallel to each other and along the long axis direction Y of the second carbon fiber 22.

The descriptions similar to the first embodiment will not be described again in the second embodiment. The long axis direction Y of the second carbon fiber 22 is perpendicular to the second microwave direction M21, and the long axis direction Y of the second carbon fiber 22 is parallel to the second electric field direction E21.

The long axis direction XA of the cavity 12 is perpendicular to the second electric field direction E21, the long axis direction XA of the cavity 12 is perpendicular to the long axis direction Y of the second carbon fiber 22, and the long axis direction XA of the cavity 12 is perpendicular to the second microwave direction M21.

The second electric field direction E21 is perpendicular to the first electric field direction E11.

The second embodiment is suitable for the carbon fiber polymer composite 2 which is formed by the latitude-arranged second carbon fibers 22 and the polymer matrix 24, for example, the ribbon shaped carbon fiber polymer composite 2 formed by the latitude-arranged second carbon fibers 22 and the polymer matrix 24, wherein a direction of the latitude related to "latitude-arranged" is the long axis direction Y of the second carbon fiber 22.

Thus, in the above microwave processing step P03, the carbon fiber polymer composite 2 can be further exposed in a second microwave M2, wherein the second microwave M2 has a second microwave direction M21, the second microwave M2 comprises a second electrical field E2, the second electrical field E2 has a second electrical field direction E21, and the second microwave direction M21 is perpendicular to the second electrical field direction E21. Furthermore, the second electrical field direction E21 is perpendicular to the first electrical field direction E11.

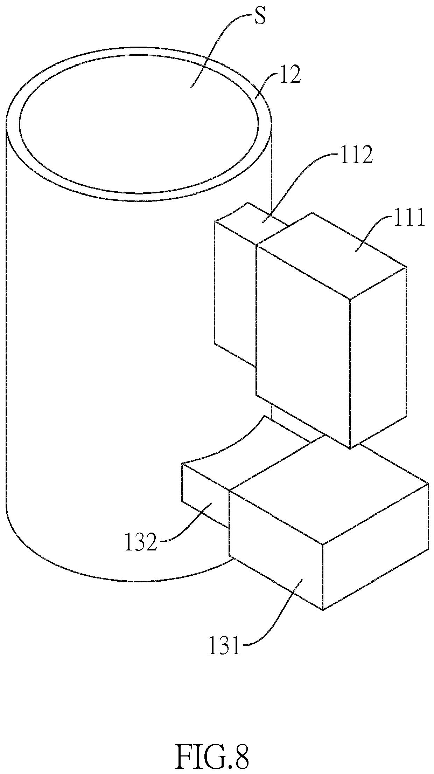

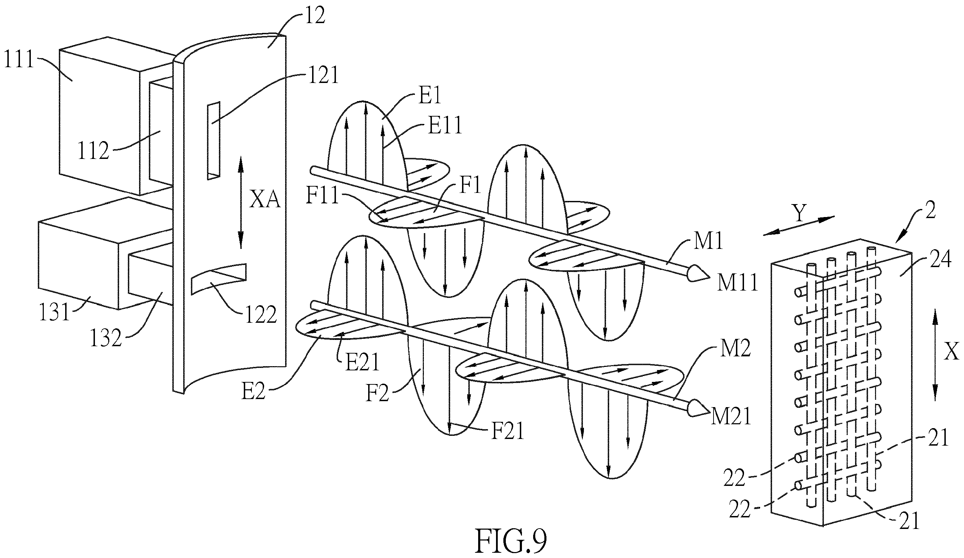

Referring to FIG. 8 and FIG. 9, a third embodiment of the present disclosure is illustrated. The descriptions similar to the first and second embodiments will not be illustrated in the third embodiment. The carbon fiber recycling device 1 simultaneously comprises the first microwave supplying unit 11 and the second microwave supplying unit 13. Preferably, the first microwave supplying unit 11 and the second microwave supplying unit 13 are arranged along the long axis direction XA of the cavity 12 in sequence. The third embodiment is suitable for the carbon fiber polymer composite 2 which is formed by the simultaneously longitude-arranged and latitude-arranged first and second carbon fibers 21, 22 and the polymer matrix 24, for example, the ribbon shaped carbon fiber polymer composite 2 formed by the simultaneously longitude-arranged and latitude-arranged first and second carbon fibers 21, 22 and the polymer matrix 24.

The second electrical field direction E21 is perpendicular to the first electrical field direction E11 in the third embodiment. Since the first electrical field direction E11 is parallel to the long axis direction X of the first carbon fiber 21, the first carbon fiber 21 can absorb all the energy of the first electrical field E1; and since the long axis direction Y of the second carbon fiber 22 is parallel to the second electrical field direction E21, the second carbon fiber 22 can absorb all the energy of the second electrical field E2. The third embodiment is suitable for the thermal decomposition of the polymer matrix 24 in the warp and weft fiber plywood in the implementation of Number 2 in Table 1, wherein the warp and weft fiber plywood has the longitude-arranged and latitude-arranged carbon fibers. Accordingly, simultaneously recycling the longitude-arranged first carbon fiber 21 and the latitude-arranged second carbon fiber 22 can be achieved, and the limitation that the first embodiment merely can recycle the first carbon fiber 21 and the limitation that the second embodiment can merely recycle the second carbon fiber 22 can be solved.

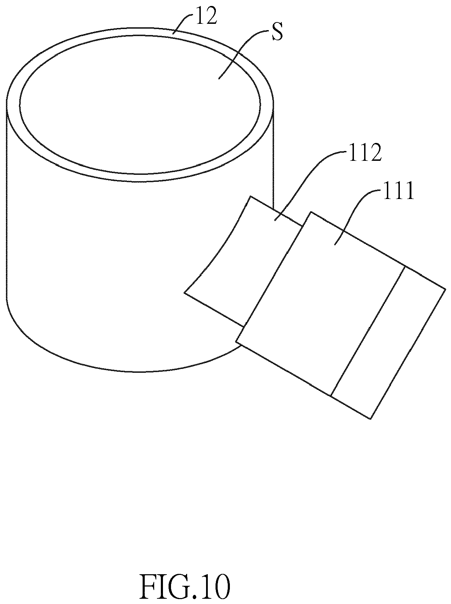

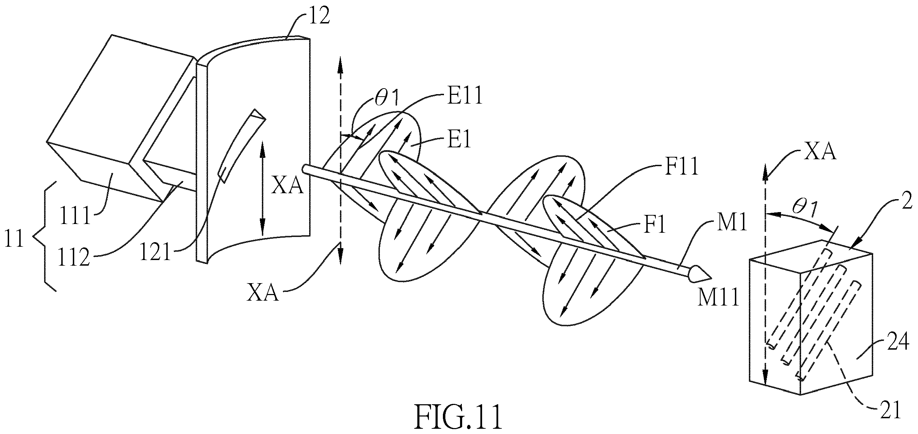

Referring to FIG. 10 and FIG. 11, a fourth embodiment of the present disclosure is described. The fourth embodiment adjusts the first microwave supplying unit 11 in the first embodiment, to make the first electric field direction E11 and the long axis direction XA of the cavity 12 have a tilting angle θ1 therebetween, the tilting angle θ1 is larger than 0 degree and less or equal to 90 degrees. The fourth embodiment is suitable for the case that the long axis direction X of the first carbon fiber 21 and the long axis direction XA of the cavity 12 have the tilting angle θ1 therebetween when the carbon fiber polymer composite 2 is disposed in the interior of the cavity 12. In other words, the first microwave supplying unit 11 can adjust the first microwave M1 to make the angle between the first electric field direction E11 and the long axis direction XA of the cavity 12 change according to the actual requirement. For example, when the carbon fiber polymer composite 2 is disposed in the interior of the cavity 12, the tilting angle θ1 between the long axis direction X of the first carbon fiber 21 and the long axis direction XA of the cavity 12 can be firstly measured or detected, and next, the first microwave M1 of the first microwave supplying unit 11 can be adjusted, so as to make angle between the first electric field direction E11 and the long axis direction XA of the cavity 12 be the same as the tilting angle θ1. Accordingly, the first electric field direction E11 and the long axis direction X of the first carbon fiber 21 are parallel to each other. When the carbon fiber polymer composite 2 is disposed in the interior of the cavity 12, it does not need to align long axis direction X of the first carbon fiber 21 to the long axis direction XA of the cavity 12 previously, but as mentioned above, it needs to adjust the first microwave supplying unit 11 according to the requirement to make the first electric field direction E11 and the long axis direction X of the first carbon fiber 21 be parallel to each other, and thus the convenience of disposing the carbon fiber polymer composite 2 in the interior of the cavity 12 can be increased.

Thus, in the above microwave processing step P03, the first microwave M1 can be further propagated to the interior of the cavity 12, the carbon fiber polymer composite 2 is disposed in the interior of the cavity 12, the cavity 12 has the long axis direction XA of the cavity 12, and the first electrical field direction E11 and the long axis direction XA of the cavity 12 has the tilting angle θ1 therebetween.

Similarly, the second microwave supplying unit 13 can adjust the second microwave M2 to make the angle between the second electric field direction E21 and the long axis direction XA of the cavity 12 change according to the actual requirement. Since the operation mechanism and principle are the same as the above descriptions in the fourth embodiment, thus omitting the redundant descriptions.

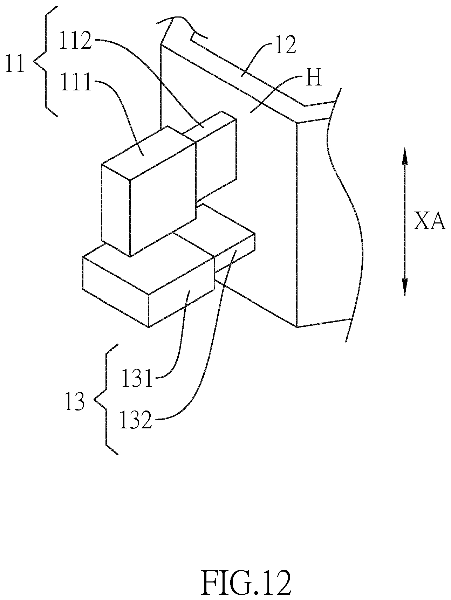

Referring to FIG. 12, a fifth embodiment of the present disclosure is illustrated. The difference between the fifth embodiment and the third embodiment is that the cavity 12 is a hollow polygonal prism, wherein outer circumference of the hollow polygonal prism is formed by a plurality of outer surfaces H, and the first microwave supplying unit 11 and the second microwave supplying unit 13 are arranged on one of the outer surfaces H of the hollow polygonal prism along the long axis direction XA of the cavity 12 in sequence. The hollow polygonal prism may be a hollow triangular prism, a hollow quadrangular prism, a hollow pentagonal prism, a hollow hexagonal prism, a hollow heptagonal prism, a hollow octagonal prism, a hollow nonagonal prism, a hollow decagonal prism, a hollow hendecagonal prism, a hollow dodecagonal prism, a tridecagonal prism, a hollow tetradecagonal prism, a hollow pentadecagonal prism, a hollow hexadecagonal prism, a hollow heptadecagonal prism, a hollow octadecagonal prism and other hollow polygonal prism.

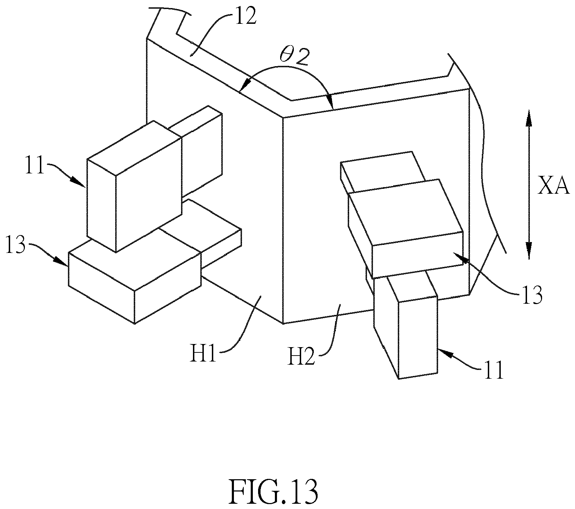

Referring to FIG. 13, a sixth embodiment of the present disclosure is illustrated. The difference between the sixth embodiment and the fifth embodiment is that twos of the outer surfaces H are respectively a first outer surface H1 and a second outer surface H2, wherein each of the first outer surface H1 and the second outer surface H2 has one of the first microwave supplying units 11 and one of the second microwave supplying units 13, and the first microwave supplying unit 11 and the second microwave supplying unit 13 are arranged along the long axis direction XA of the cavity 12 in sequence. The first microwave supplying unit 11 of the first outer surface H1 and the first microwave supplying unit 11 of the second outer surface H2 are located at different levels, and the second microwave supplying unit 13 of the first outer surface H1 and the second microwave supplying unit 13 of the second outer surface H2 are located at different levels. The first microwave supplying unit 11 of the outer surface H1 and the second microwave supplying unit 13 of the second outer surface H2 are located at a same level, and second microwave supplying unit 13 of the outer surface H1 and the first microwave supplying unit 11 of the second outer surface H2 are located at a same level. Preferably, the first outer surface H1 is adjacent to the second outer surface H2.

The first outer surface H1 and the second outer surface H2 have an angle θ2 therebetween; or alternatively, inner circumference of the hollow polygonal prism is formed by a plurality of inner surfaces, the inner surfaces have a first inner surface (not shown in the drawings) corresponding to the first outer surface H1, the inner surfaces have a second inner surface (not shown in the drawings) corresponding to the second outer surface H2, and the first and second inner surface have the angle θ2 therebetween. The angle θ2 is between 60 degrees and 160 degrees. Preferably, the angle θ2 is between 90 degrees and 150 degrees. More preferably, the angle θ2 is between 120 degrees and 144 degrees. Optimally, the angle θ2 is 120 degrees. It is noted that, the range in the present disclosure comprises the end value.

Certainly, the present disclosure can dispose one of the first microwave supplying units 11 and one of the second microwave supplying units 13 on each of the outer surfaces H, wherein the first microwave supplying unit 11 on one of the two adjacent outer surfaces H and the first microwave supplying unit 11 on other one of the two adjacent outer surfaces H are located at different levels, and the first microwave supplying unit 11 on one of the two adjacent outer surfaces H and the second microwave supplying unit 13 on other one of the two adjacent outer surfaces H are located at a same level.

To sum up, the carbon fiber recycling method of the present disclosure is indeed disclosed by the descriptions of different embodiments, and the carbon fiber recycling method in one of the embodiments can achieve the desired result(s).

## Claims

1. A carbon fiber recycling method, used to recycle a first carbon fiber (21) from a carbon fiber polymer composite (2), wherein the carbon fiber polymer composite (2) comprises a polymer matrix (24) and the first carbon fiber (21), the polymer matrix (24) is coupled to the first carbon fiber (21), the first carbon fiber (21) comprises a first long axis direction (X), and the carbon fiber recycling method is **characterized in**, comprising following sequential steps:
a composite providing step (P01): providing the carbon fiber polymer composite (2); and
a microwave processing step (P03): exposing the carbon fiber polymer composite (2) in a first microwave (M1); wherein the first microwave (M1) has a first microwave direction (M11), the first microwave (M1) comprises a first electrical field (E1), the first electrical field (E1) has a first electrical field direction (E11), and the first microwave direction (M11) and the first electrical field direction (E11) are perpendicular to each other; moreover, the long axis direction (X) of the first carbon fiber (21) and the first microwave direction (M11) are perpendicular to each other.

2. The carbon fiber recycling method according to claim 1, wherein the long axis direction (X) of the first carbon fiber (21) and the first electrical field direction (E11) are parallel to each other.

3. The carbon fiber recycling method according to claim 2, wherein the carbon fiber recycling method further comprises an oxygen lowering step (P02) executed after the composite providing step (P01) and before the microwave processing step (P03), the oxygen lowering step (P02) makes the carbon fiber polymer composite (2) disposed within a first gas atmosphere, and the first gas atmosphere has a first oxygen concentration.

4. The carbon fiber recycling method according to claim 3, wherein the carbon fiber recycling method further comprises a gas replacing step (P04), the carbon fiber polymer composite (2) is continuously illuminated under the first microwave (M1), and after the microwave processing step (P03), the gas replacing step (P04) is executed; still under continuous illumination of the first microwave (M1), the gas replacing step (P04) makes the carbon fiber polymer composite (2) disposed within a second gas atmosphere, and the second gas atmosphere has a second oxygen concentration larger than the first oxygen concentration.

5. The carbon fiber recycling method according to claim 4, wherein the carbon fiber recycling method further comprises a carbon fiber recycling step (P05), the carbon fiber recycling step (P05) is executed after the gas replacing step (P04); the carbon fiber recycling step (P05) makes the first carbon fiber (21) not exposed within the first microwave (M1), and obtains the first carbon fiber (21).

6. The carbon fiber recycling method according to claim 5, wherein the first oxygen concentration is lower than or equal to 1 ppm, and the second oxygen concentration is larger than 1 ppm and/or wherein an electrical power density of the first microwave (M1) is between 200 W/m³ and 2000 kW/m³.

7. The carbon fiber recycling method according to claim 2, wherein in the composite providing step (P01), the carbon fiber polymer composite (2) is cut, then the carbon fiber polymer composite (2) is forward arranged or stacked centrally along the long axis direction (X) of the first carbon fiber (21), such that the first electrical field direction (E11) and the long axis direction (X) of the first carbon fiber (21) are parallel to each other.

8. The carbon fiber recycling method according to claim 2, wherein the first microwave (M1) is propagated to interior of a cavity (12), the carbon fiber polymer composite (2) is disposed in the interior of the cavity (12), and a volume ratio of the carbon fiber polymer composite (2) to the cavity (12) is between 0.3 and 0.8.

9. The carbon fiber recycling method according to claim 8, wherein the volume ratio of the carbon fiber polymer composite (2) to the cavity (12) is between 0.35 and 0.5.

10. The carbon fiber recycling method according to claim 2, wherein in the microwave processing step (P03), the carbon fiber polymer composite (2) is exposed in a second microwave (M2); wherein the second microwave (M2) has a second microwave direction (M21), the second microwave (M2) comprises a second electrical field (E2), the second electrical field (E2) has a second electrical field direction (E21), and the second microwave direction (M21) and the second electrical field direction (E21) are perpendicular to each other; moreover, the second electrical field direction (E21) and the first electrical field direction (E11) are perpendicular to each other.

11. The carbon fiber recycling method according to claim 2, wherein the first microwave (M1) is propagated to interior of a cavity (12), the carbon fiber polymer composite (2) is disposed in the interior of the cavity (12), the cavity (12) has a long axis direction (XA) of the cavity (12), the first electrical field direction (E11) and the long axis direction (XA) of the cavity (12) has a tilting angle (θ1), and the tilting angle (θ1) is larger than 0 degree and less than or equal to 90 degrees.

12. The carbon fiber recycling method according to claim 2, wherein the first microwave (M1) is propagated to interior of a cavity (12), the carbon fiber polymer composite (2) is disposed in the interior of the cavity (12), and the cavity (12) is a hollow cylinder.

13. The carbon fiber recycling method according to claim 2, wherein the first microwave (M1) is propagated to interior of a cavity (12), the carbon fiber polymer composite (2) is disposed in the interior of the cavity (12), and the cavity (12) is a hollow polygonal prism.

14. The carbon fiber recycling method according to claim 13, wherein outer circumference of the hollow polygonal prism is formed by a plurality of outer surfaces (H), twos of the outer surfaces (H) are respectively a first outer surface (HI) and a second outer surface (H2), and the first outer surface (HI) and the second outer surface (H2) are adjacent to each other; inner circumference of the hollow polygonal prism is formed by a plurality of inner surfaces, and the inner surfaces have a first inner surface corresponding to the first outer surface (HI) and a second inner surface corresponding to the second outer surface (H2); the first outer surface (HI) and the second outer surface (H2) have an angle (θ2) therebetween, or the first inner surface and the second inner surface have the angle (θ2) therebetween; the angle (θ2) is between 60 degrees and 160 degrees.

15. The carbon fiber recycling method according to claim 14, wherein the angle (θ2) is between 90 degrees and 150 degrees, particularly between 120 degrees and 144 degrees, especially 120 degrees.

16. A carbon fiber recycling method, used to recycle a first carbon fiber (21) from a carbon fiber polymer composite (2), wherein the carbon fiber polymer composite (2) comprises a polymer matrix (24) and the first carbon fiber (21), the polymer matrix (24) is coupled to the first carbon fiber (21), the first carbon fiber (21) comprises a first long axis direction (X), and the carbon fiber recycling method is **characterized in**, comprising following sequential steps:
a composite providing step (P01): providing the carbon fiber polymer composite (2); and
a microwave processing step (P03): exposing the carbon fiber polymer composite (2) in a first microwave (M1); wherein the first microwave (M1) has a first microwave direction (M11), the first microwave (M1) comprises a first electrical field (E1), the first electrical field (E1) has a first electrical field direction (E11), and the first microwave direction (M11) and the first electrical field direction (E11) are perpendicular to each other; moreover, and the long axis direction (X) of the first carbon fiber (21) and first electrical field direction (E11) are parallel to each other.
